# EUROPÄISCHE PATENTSCHRIFT

(11) **EP 4 127 426 B1**
(45) Veröffentlichungstag und Bekanntmachung des Hinweises auf die Patenterteilung: **26.02.2025**
(21) Anmeldenummer: 21710892.7
(22) Anmeldetag: 02.03.2021
(51) Int. Cl.: F01M 11/02, F16L 41/03, F16L 47/32, B29C 45/17

(54) **MEDIENKANALANORDNUNG FÜR EINE VERBRENNUNGSKRAFTMASCHINE, VERBRENNUNGSKRAFTMASCHINE MIT EINER MEDIENKANALANORDNUNG, KRAFTFAHRZEUG MIT EINER VERBRENNUNGSKRAFTMASCHINE UND VERFAHREN ZUR HERSTELLUNG EINER MEDIENKANALANORDNUNG**
MEDIA CHANNEL ASSEMBLY FOR AN INTERNAL COMBUSTION ENGINE, INTERNAL COMBUSTION ENGINE HAVING A MEDIA CHANNEL ASSEMBLY, MOTOR VEHICLE HAVING AN INTERNAL COMBUSTION ENGINE AND METHOD FOR PRODUCING A MEDIA CHANNEL ASSEMBLY
ENSEMBLE DE CANAUX DE FLUIDE POUR UN MOTEUR À COMBUSTION INTERNE, MOTEUR À COMBUSTION INTERNE DOTÉ D'UN ENSEMBLE DE CANAUX DE FLUIDE, VÉHICULE AUTOMOBILE ÉQUIPÉ D'UN MOTEUR À COMBUSTION INTERNE ET PROCÉDÉ DE FABRICATION D'UN ENSEMBLE DE CANAUX DE FLUIDE

(30) Priorität: 26.03.2020 DE 102020108331
(43) Veröffentlichungstag der Anmeldung: 08.02.2023
(73) Patentinhaber: Bayerische Motoren Werke Aktiengesellschaft, 80809 München (DE)
(72) Erfinder: SCHRATTENBERGER, Andreas, 80798 München (DE); WEIDINGER, Ferdinand, 80636 München (DE)
(86) Internationale Anmeldenummer: PCT/EP2021/055112
(87) Internationale Veröffentlichungsnummer: WO 2021/190871

(56) Entgegenhaltungen:
- EP-A1- 0 484 312
- EP-B1- 0 484 312
- WO-A1-2004/048765
- DE-B3- 102017 211 826
- DE-U1- 8 521 528
- FR-A1- 2 866 386
- FR-A1- 2 905 141
- RADIG G: "Multifunktionales Kunststoffmodul auf engstem Raum", KUNSTSTOFFE, CARL HANSER VERLAG, MUNCHEN, DE, no. 11, 1 November 2010 (2010-11-01), pages 86 - 88, XP001525759, ISSN: 0023-5563
- BRUNSWICK A ET AL: "HERSTELLUNG MEDIENFUEHRENDER LEITUNGEN", GASINJEKTIONSTECHNIK, XX, XX, 1 April 2003 (2003-04-01), pages 185 - 200, XP009015088

## Beschreibung

Die Erfindung betrifft eine Medienkanalanordnung für eine Verbrennungskraftmaschine, mit zumindest einem Verteilerkanal, zum Verteilen eines Mediums an verschiedene Komponenten der Verbrennungskraftmaschine und mit wenigstens einem Zulaufkanal, welcher über zumindest eine Mediendurchgangsöffnung mit dem Verteilerkanal gekoppelt ist. Weitere Aspekte der Erfindung betreffen eine Verbrennungskraftmaschine mit einer Medienkanalanordnung sowie ein Kraftfahrzeug mit einer Verbrennungskraftmaschine.

Aus der EP 0 484 312 A1 ist eine Mehrzylinder-Brennkraftmaschine mit je Zylinder mindestens einem im Zylinderkopf angeordneten Einlasskanal bekannt, der an ein für mehrere Zylinder gemeinsames Ansauggehäuse angeschlossen ist. Am scharfkantigen Eintritt der Einlasskanäle in den Zylinderkopf ist je ein dem Zylinderkopf vorsetzbarer strömungsgünstig abgerundetes Bauteil als Einlaufhilfe vorgesehen ist und das Ansauggehäuse gegenüber dem Zylinderkopf mittels einer umlaufenden Dichtung abgedichtet ist. Der die Einlaufhilfe bildende strömungsgünstig abgerundete Bauteil und die umlaufenden Dichtung sind einstückig ausgebildet, wobei eine gemeinsame Halteplatte vorgesehen ist, die mit ihrem Umfangsbereich die umlaufende Dichtung und im Übrigen die Einlaufhilfe bildet, indem sie mit den Einlasskanälen des Zylinderkopfs korrespondierende Öffnungen aufweist, und aus je einem an den scharfkantigen Eintritt der Einlasskanäle mit einer scharfen Kante anschließbaren ringförmigen, stark gewölbten Wulst besteht, der einen Einlaufquerschnitt besitzt, der erheblich größer ist als der Einlassquerschnitt des Einlasskanals des Zylinderkopfes.

Der WO 2004/048765 A1 ist ein gegossenes Bauteil für eine Brennkraftmaschine zu entnehmen. Bei dem Bauteil handelt es sich um ein Zylinderkurbelgehäuse, das mindestens einen Führungskanal aufweist, der ein fluides Medium zu einer Bedarfsstelle weiterleitet, wobei er in Form eines Rohres ausgebildet und beim Gießen des Bauteiles mit eingegossen ist. Bei dem fluiden Medium handelt es sich um Öl und bei dem mindestens einen Führungskanal um eine Ölzuleitung zu einem zu schmierenden Kurbelwellenlager und/oder Nockenwellenlager als Bedarfsstelle.

Aus der FR 2 905 141 A1 ist ein System zum Einlassen von Gas, beispielsweise Luft, in eine Brennkraftmaschine, insbesondere Diesel, mit mehreren Zylindern, einem Zylinderkopf und einem Gasverteiler am Zylinderkopf bekannt. Das System umfasst eine Vorrichtung zur Verringerung der Streuung von Wirbelbewegungen, genannt Wirbel, von einem Zylinder zum anderen.

Um einen möglichst hohen Wirkungsgrad beim Betrieb einer Verbrennungskraftmaschine zu erzielen, werden verschiedene Ansätze verfolgt. Hierzu gehören beispielsweise Maßnahmen zur Verringerung einer beim Betrieb der Verbrennungskraftmaschine auftretenden Reibleistung sowie ein bedarfsgerechtes Einstellen von Nebenaggregaten, wie beispielsweise einer Ölpumpe, um nur einige Beispiele zu nennen.

Aufgabe der vorliegenden Erfindung ist es, eine Medienkanalanordnung, eine Verbrennungskraftmaschine sowie ein Kraftfahrzeug der eingangs genannten Art zu schaffen, welche mit verbessertem Wirkungsgrad betrieben werden können.

Diese Aufgaben werden durch eine Medienkanalanordnung mit den Merkmalen des Patentanspruchs 1, durch eine Verbrennungskraftmaschine mit den Merkmalen des Patentanspruchs 6 sowie durch ein Kraftfahrzeug mit den Merkmalen des Patentanspruchs 7 gelöst. Vorteilhafte Ausgestaltungen mit zweckmäßigen Weiterbildungen der Erfindung sind in den Unteransprüchen angegeben.

Ein erster Aspekt der Erfindung betrifft eine Medienkanalanordnung für eine Verbrennungskraftmaschine, mit zumindest einem Verteilerkanal, zum Verteilen eines Mediums an verschiedene Komponenten der Verbrennungskraftmaschine und mit wenigstens einem Zulaufkanal, welcher über zumindest eine Mediendurchgangsöffnung mit dem Verteilerkanal gekoppelt ist. Die verschiedenen Komponenten können beispielsweise jeweilige Kurbelwellenlager oder ein Zylinderkopf der Verbrennungskraftmaschine sein, um nur einige Beispiele zu nennen.

Zudem ist vorgesehen, dass wenigstens ein der Mediendurchgangsöffnung gegenüberliegender Wandbereich des Verteilerkanals zumindest bereichsweise zur Mediendurchgangsöffnung hin gewölbt ist. Mit anderen Worten ist also der Wandbereich, welcher der Mediendurchgangsöffnung gegenüber liegt in Richtung der Mediendurchgangsöffnung gewölbt. Dies ist von Vorteil, da durch eine derartige Wölbung des Wandbereichs in Richtung der Mediendurchgangsöffnung wirksam vermieden werden kann, dass aus dem Zulaufkanal über die Mediendurchgangsöffnung in den Verteilerkanal einströmendes Medium nahezu senkrecht auf den Wandbereich auftrifft, wodurch es zu erhöhten Druckverlusten und Strömungswiderständen bei einem Überströmen des Mediums aus dem Zulaufkanal in den Verteilerkanal kommen würde. Stattdessen kann anhand des in Richtung der Mediendurchgangsöffnung gewölbten Wandbereichs eine besonders strömungsgünstige und dementsprechend druckverlustarme Umlenkung des Mediums innerhalb des Verteilerkanals erfolgen, wodurch im Vergleich zu konventionellen Kanalanordnungen letztlich eine Wirkungsgradverbesserung erzielt werden kann.

Gemäß der Erfindung ist vorgesehen, dass zumindest ein an den Wandbereich angrenzender, der Mediendurchgangsöffnung gegenüberliegender zweiter Wandbereich entgegengesetzt zur Mediendurchgangsöffnung gewölbt ist. Mit anderen Worten ist also der zweite Wandbereich in zur Mediendurchgangsöffnung entgegengesetzter Richtung gewölbt, also sozusagen von der Mediendurchgangsöffnung weg gewölbt. Der zweite Wandbereich kann also eine zweite Wölbung aufweisen, welche in zur Mediendurchgangsöffnung entgegengesetzten Richtung gewölbt sein kann. Dies ist von Vorteil, da der Wandbereich und der zweite Wandbereich somit gemeinsam einen wellenförmigen Wandabschnitt des Verteilerkanals bilden können, wobei der wellenförmige Wandabschnitt eine besonders strömungsgünstige Führung des Mediums bewirken kann.

In einer vorteilhaften Weiterbildung der Erfindung ist vorgesehen, dass der Verteilerkanal einen Verjüngungsbereich mit einem sich in Richtung eines von dem Wandbereich beabstandeten Kanalendes verjüngenden Öffnungsquerschnitt aufweist. Dies ist von Vorteil, da durch den sich verjüngenden Öffnungsquerschnitt eine verbesserte Druckgleichverteilung des innerhalb des Verjüngungsbereichs strömenden Mediums erzielt werden kann.

Eine weitere vorteilhafte Weiterbildung der Erfindung sieht vor, dass die Medienkanalanordnung eine Mehrzahl an Medienablaufkanälen umfasst, welche voneinander beabstandet entlang des Verjüngungsbereichs verteilt und über den Verteilerkanal mit dem Medium versorgbar sind. Dies ist von Vorteil, da aufgrund des sich verjüngenden Öffnungsquerschnitts und der entlang des Verjüngungsbereichs verteilten Medienablaufkanäle zumindest jeweils annähernd gleiche Drücke des Mediums in den jeweiligen Medienablaufkanälen eingestellt werden können.

Gemäß einer weiteren vorteilhaften Weiterbildung der Erfindung ist die Medienkanalanordnung zumindest bereichsweise aus Kunststoff gebildet. Dies ist von Vorteil, da die zumindest bereichsweise, vorzugsweise vollständig aus Kunststoff gebildete Medienkanalanordnung dadurch - im Gegensatz zu einer etwaigen Ausgestaltung der Medienkanalanordnung aus Metall - eine besonders gute thermische Isolation bietet, sodass eine starke Temperaturänderung des Mediums bei dessen Strömen durch die Medienkanalanordnung vermieden werden kann. Darüber hinaus weist Kunststoff ein besonders geringes Gewicht auf.

In einer weiteren vorteilhaften Weiterbildung der Erfindung ist die Medienkanalanordnung als Ölgalerie ausgebildet. Dies ist von Vorteil, da Öl als Medium, welches durch die als Ölgalerie ausgestaltete Medienkanalanordnung strömt, zwar eine besonders temperaturabhängige Viskosität aufweist, jedoch aufgrund des gewölbten Wandbereichs des Verteilerkanals auch bei hoher Viskosität und entsprechend niedriger Temperatur des als Öl ausgebildeten Mediums ein vergleichsweise widerstandsarmer Transport des Mediums innerhalb der Medienkanalanordnung erzielt werden kann. Insofern eignet sich die Medienkanalanordnung besonders für deren Einsatz als Ölgalerie.

Ein zweiter Aspekt der Erfindung betrifft eine Verbrennungskraftmaschine mit einer Medienkanalanordnung gemäß dem ersten Aspekt der Erfindung. Die Medienkanalanordnung trägt dazu bei, dass die Verbrennungskraftmaschine mit verbessertem Wirkungsgrad betrieben werden kann.

Ein dritter Aspekt der Erfindung betrifft ein Kraftfahrzeug mit einer Verbrennungskraftmaschine gemäß dem zweiten Aspekt der Erfindung. Ein derartiges Kraftfahrzeug, welches eine Verbrennungskraftmaschine mit einer Medienkanalanordnung gemäß dem ersten Aspekt der Erfindung umfasst, kann mit verbessertem Wirkungsgrad betrieben werden.

Bei einem Verfahren zur Herstellung einer Medienkanalanordnung wird ein flüssiger Kunststoff in eine für die Medienkanalanordnung formgebende Kavität gefüllt, anschließend eine Flüssigkeit in die Kavität gepresst und dadurch ein Teil des flüssigen Kunststoffs aus der Kavität herausgedrückt, wodurch der Teil des flüssigen Kunststoffs von die Medienkanalanordnung bildendem, in der Kavität verbleibendem Kunststoff getrennt wird. Durch dieses Verfahren kann der Medienkanalanordnung eine besonders strömungsgünstige Kontur verliehen werden. Durch das Herausdrücken des Teils des flüssigen Kunststoffs aus der Kavität anhand der Flüssigkeit können strömungsgünstige Verrundungen, insbesondere Kantenverrundungen, geschaffen werden.

Infolge des Einpressens der Flüssigkeit kann der in der Kavität verbleibende Kunststoff abgekühlt werden und dadurch erstarren. Die Flüssigkeit kann also eine Doppelfunktion erfüllen, nämlich einerseits den Teil des flüssigen Kunststoffs aus der Kavität herausdrücken und andererseits den verbleibenden Kunststoff derart abkühlen, dass sich dieser verfestigt und insbesondere erstarrt.

Die in Bezug auf einen der Aspekte vorgestellten bevorzugten Ausführungsformen und deren Vorteile gelten entsprechend für die jeweils anderen Aspekte der Erfindung und umgekehrt.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Weitere Vorteile, Merkmale und Einzelheiten der Erfindung ergeben sich aus den Ansprüchen, der nachfolgenden Beschreibung bevorzugter Ausführungsformen sowie anhand der Zeichnungen.

Im Folgenden ist die Erfindung noch einmal anhand eines konkreten Ausführungsbeispiels erläutert. Hierzu zeigt:
- Fig. 1: eine stark abstrahierte Darstellung eines Kraftfahrzeugs mit einer Verbrennungskraftmaschine, welche eine in einer schematischen Seitenansicht gezeigte Medienkanalanordnung aufweist;
- Fig. 2: eine vergrößerte Darstellung eines in Fig. 1 umrandeten Bereichs A der Medienkanalanordnung; und
- Fig. 3: eine schematische Schnittdarstellung der Medienkanalanordnung.

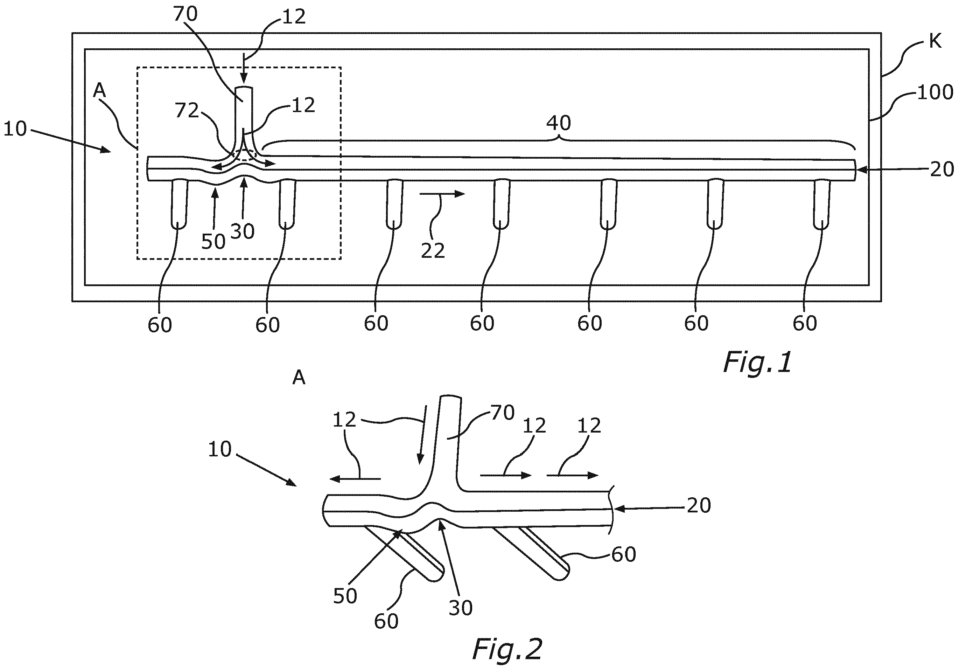

Fig. 1 zeigt eine stark abstrahierte Darstellung eines Kraftfahrzeugs K mit einer Verbrennungskraftmaschine 100.

Die Verbrennungskraftmaschine umfasst eine vorliegend als Ölgalerie ausgebildet Medienkanalanordnung 10. Die Medienkanalanordnung 10 dient also zum Führen eines durch jeweilige Pfeile verdeutlichten Mediums 12, bei welchem es sich vorliegend um Öl, insbesondere Motoröl, handelt.

Die Medienkanalanordnung 10 umfasst einen Verteilerkanal 20, über welchen das Medium 12 an verschiedene Komponenten, zu welchen beispielsweise Kurbelwellenlager der Verbrennungskraftmaschine 100 gehören, geführt werden kann. Hierzu umfasst die Medienkanalanordnung 10 eine Mehrzahl an voneinander beabstandeten Medienablaufkanälen 60, wobei jeweils einer der Medienablaufkanäle 60 zum Führen des Mediums 12 (hier: Öl) zu jeweils einer der Komponente dient.

Die Medienkanalanordnung 10 umfasst des Weiteren einen Zulaufkanal 70 welcher über eine Mediendurchgangsöffnung 72 mit dem Verteilerkanal 20 gekoppelt ist. Das Medium 12 kann also durch den Zulaufkanal 70 und über die Mediendurchgangsöffnung 72 in den Verteilerkanal 20 eingeleitet werden. Die Mediendurchgangsöffnung 72 ist in Fig. 1 durch eine gestrichelte Linie angedeutet.

Ein der Mediendurchgangsöffnung 72 gegenüberliegender Wandbereich 30 des Verteilerkanals 20 ist zur Mediendurchgangsöffnung 72 hin gewölbt, wie besonders deutlich anhand von Fig. 2, welche eine vergrößerte Darstellung eines in Fig. 1 gestrichelt umrandeten Bereichs A zeigt, erkennbar ist. Mit anderen Worten weist also der Verteilerkanal 20 eine dem Wandbereich 30 zugeordnete und der Mediendurchgangsöffnung 72 zugewandte Wölbung auf, welche auch als erste Wölbung bezeichnet werden kann.

Ein an den Wandbereich 30 angrenzender, der Mediendurchgangsöffnung 72 gegenüberliegender, zweiter Wandbereich 50 ist - im Gegensatz zum (ersten) Wandbereich 30 entgegengesetzt zur Mediendurchgangsöffnung 72 gewölbt. Mit anderen Worten weist also der Verteilerkanal 20 eine, dem zweiten Wandbereich 50 zugeordnete und der Mediendurchgangsöffnung 72 abgewandte Wölbung auf, welche auch als zweite Wölbung bezeichnet werden kann.

Der Verteilerkanal 20 umfasst zudem einen Verjüngungsbereich 40 mit einem sich in Richtung 22 eines von dem Wandbereich 30 beabstandeten Kanalendes verjüngenden Öffnungsquerschnitt 72 auf. Die Richtung 22 ist dabei durch einen weiteren Pfeil verdeutlicht. Entlang des Verjüngungsbereichs 40 verteilt sind die jeweiligen Medienablaufkanäle 60 angeordnet, welche über den Verteilerkanal 20 mit dem Medium 12 versorgt werden können.

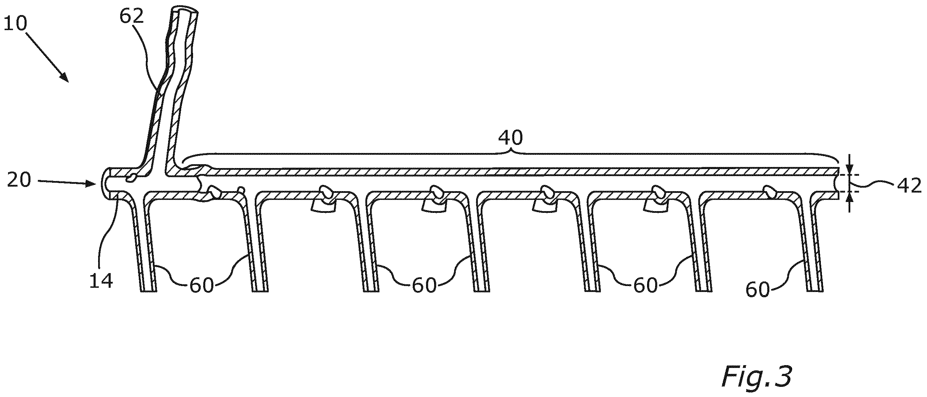

Die Medienkanalanordnung 10 ist vorliegend vollständig aus Kunststoff 14 gebildet, wobei jeweilige Wandstärken einer aus dem Kunststoff gebildeten Wandung der Medienkanalanordnung 10 anhand von Fig. 3 erkennbar sind. Zudem ist anhand von Fig. 3 erkennbar, dass die Medienkanalanordnung 10 einen Steigkanal 62 umfasst, welcher über den Verteilerkanal 20 mit dem Medium 12 versorgt werden kann. Über den Steigkanal 62 kann das Medium 12 zu einem nicht weiter gezeigten Zylinderkopf als weitere Komponente der Verbrennungskraftmaschine 100 geführt werden.

Bei einem Verfahren zur Herstellung der Medienkanalanordnung 10 kann zunächst flüssiger Kunststoff in eine vorliegend nicht weiter gezeigte, für die Medienkanalanordnung 10 formgebende Kavität gefüllt werden. Die Kavität kann beispielsweise als Gussbauteil ausgebildet sein. Anschließend wird eine Flüssigkeit, insbesondere Wasser in die Kavität gepresst und dadurch sozusagen in die Kavität eingespritzt. Dadurch wird ein Teil des flüssigen Kunststoffs aus der Kavität verdrängt und damit herausgedrückt, wodurch der Teil des flüssigen Kunststoffs von die Medienkanalanordnung 10 bildendem, in der Kavität verbleibendem Kunststoff 14 getrennt wird. Der verbleibende Kunststoff 14 bildet dabei eine thermisch isolierende Wandung der Medienkanalanordnung 10.

Zusammenfassend ist mit der vorliegenden Medienkanalanordnung 10 eine besonders strömungswiderstandsarme und damit druckverlustoptimierte Führung des Mediums 12 (hier: Öl) ermöglicht, zumal die Medienkanalanordnung 10 nicht nur mit den entsprechend gewölbten Wandbereichen 30, 50 versehen ist, sondern auch Verrundungen und den Verjüngungsbereich 40 aufweist. Die Kavität kann beispielsweise als Gussbauteil ausgebildet und bereitgestellt werden, in welches der flüssige Kunststoff gefüllt werden kann. Durch das Pressen der Flüssigkeit in die Kavität wird der überschüssige Teil des flüssigen Kunststoffs aus der Kavität verdrängt, wobei der in der Kavität verbleibende Kunststoff 14 thermisch isolierend wirkt.

### Bezugszeichenliste

- 10: Medienkanalanordnung
- 12: Medium
- 14: Kunststoff
- 20: Verteilerkanal
- 22: Richtung
- 30: Wandbereich
- 40: Verjüngungsbereich
- 42: Öffnungsquerschnitt
- 50: zweiter Wandbereich
- 60: Medienablaufkanal
- 62: Steigkanal
- 70: Zulaufkanal
- 72: Mediendurchgangsöffnung
- 100: Verbrennungskraftmaschine
- K: Kraftfahrzeug

## Patentansprüche

1. Medienkanalanordnung (10) für eine Verbrennungskraftmaschine (100), mit zumindest einem Verteilerkanal (20), zum Verteilen eines Mediums (12) an verschiedene Komponenten der Verbrennungskraftmaschine (100) und mit wenigstens einem Zulaufkanal (70), welcher über zumindest eine Mediendurchgangsöffnung (72) mit dem Verteilerkanal (20) gekoppelt ist, wobei wenigstens ein der Mediendurchgangsöffnung (72) gegenüberliegender Wandbereich (30) des Verteilerkanals (20) zumindest bereichsweise zur Mediendurchgangsöffnung (72) hin gewölbt ist,
**dadurch gekennzeichnet, dass**
zumindest ein an den Wandbereich (30) angrenzender, der Mediendurchgangsöffnung (72) gegenüberliegender zweiter Wandbereich (50) entgegengesetzt zur Mediendurchgangsöffnung (72) gewölbt ist.

2. Medienkanalanordnung (10) nach Anspruch 1,
**dadurch gekennzeichnet, dass**
der Verteilerkanal (20) einen Verjüngungsbereich (40) mit einem sich in Richtung (22) eines von dem Wandbereich (30) beabstandeten Kanalendes verjüngenden Öffnungsquerschnitt (42) aufweist.

3. Medienkanalanordnung (10) nach Anspruch 2,
**dadurch gekennzeichnet, dass**
die Medienkanalanordnung (10) eine Mehrzahl an Medienablaufkanälen (60) umfasst, welche voneinander beabstandet, entlang des Verjüngungsbereichs (40) verteilt und über den Verteilerkanal (20) mit dem Medium (12) versorgbar sind.

4. Medienkanalanordnung (10) nach einem der vorhergehenden Ansprüche,
**dadurch gekennzeichnet, dass**
die Medienkanalanordnung (10) zumindest bereichsweise aus Kunststoff (14) gebildet ist.

5. Medienkanalanordnung (10) nach einem der vorhergehenden Ansprüche,
**dadurch gekennzeichnet, dass**
die Medienkanalanordnung (10) als Ölgalerie ausgebildet ist.

6. Verbrennungskraftmaschine (100) mit einer Medienkanalanordnung (10) nach einem der Ansprüche 1 bis 5.

7. Kraftfahrzeug (K) mit einer Verbrennungskraftmaschine (100) nach Anspruch 6.

## Claims

1. Media channel arrangement (10) for an internal combustion engine (100), having at least one distributor channel (20), which serves for distributing a medium (12) to various components of the internal combustion engine (100), and having at least one inflow channel (70), which is coupled to the distributor channel (20) via at least one media passage opening (72), wherein at least one wall region (30), situated opposite the media passage opening (72), of the distributor channel (20) is, at least regionally, curved towards the media passage opening (72),
**characterized in that**
at least one second wall region (50), which adjoins the wall region (30) and is situated opposite the media passage opening (72), is curved oppositely in relation to the media passage opening (72).

2. Media channel arrangement (10) according to Claim 1,
**characterized in that**
the distributor channel (20) has a narrowing region (40) with an opening cross section (42) which narrows in the direction (22) of a channel end which is spaced apart from the wall region (30).

3. Media channel arrangement (10) according to Claim 2,
**characterized in that**
the media channel arrangement (10) comprises a plurality of media outflow channels (60) which are spaced apart from one another, are distributed along the narrowing region (40) and are able to be supplied with the medium (12) via the distributor channel (20).

4. Media channel arrangement (10) according to one of the preceding claims,
**characterized in that**
the media channel arrangement (10) is, at least regionally, formed from plastic (14).

5. Media channel arrangement (10) according to one of the preceding claims,
**characterized in that**
the media channel arrangement (10) is in the form of an oil gallery.

6. Internal combustion engine (100) having a media channel arrangement (10) according to one of Claims 1 to 5.

7. Motor vehicle (K) having an internal combustion engine (100) according to Claim 6.

## Revendications

1. Agencement de canaux de fluide (10) pour un moteur à combustion interne (100), avec au moins un canal de distribution (20) pour distribuer un fluide (12) à différents composants du moteur à combustion interne (100) et avec au moins un canal d'alimentation (70) qui est couplé au canal de distribution (20) par l'intermédiaire d'au moins une ouverture de passage de fluide (72), au moins une zone de paroi (30) du canal de distribution (20) opposée à l'ouverture de passage de fluide (72) étant bombée au moins par zones vers l'ouverture de passage de fluide (72),
**caractérisé en ce que**
au moins une deuxième zone de paroi (50) adjacente à la zone de paroi (30) et opposée à l'ouverture de passage de fluide (72) est bombée en sens inverse de l'ouverture de passage de fluide (72).

2. Agencement de canaux de fluide (10) selon la revendication 1,
**caractérisé en ce que**
le canal de distribution (20) présente une zone de rétrécissement (40) avec une section transversale d'ouverture (42) se rétrécissant en direction (22) d'une extrémité de canal espacée de la zone de paroi (30).

3. Agencement de canaux de fluide (10) selon la revendication 2,
**caractérisé en ce que**
l'agencement de canaux de fluide (10) comprend une pluralité de canaux d'écoulement de fluide (60) qui sont espacés les uns des autres, répartis le long de la zone de rétrécissement (40) et qui peuvent être approvisionnés en fluide (12) par l'intermédiaire du canal de distribution (20).

4. Agencement de canaux de fluide (10) selon l'une quelconque des revendications précédentes,
**caractérisé en ce que**
l'agencement de canaux de fluide (10) est formé au moins par zones en matière plastique (14).

5. Agencement de canaux de fluide (10) selon l'une quelconque des revendications précédentes,
**caractérisé en ce que**
l'agencement de canaux de fluide (10) est réalisé sous forme de galerie d'huile.

6. Moteur à combustion interne (100) avec un agencement de canaux de fluide (10) selon l'une quelconque des revendications 1 à 5.

7. Véhicule automobile (K) avec un moteur à combustion interne (100) selon la revendication 6.
